(19) Europäisches Patentamt / European Patent Office / Office européen des brevets

(11) **EP 3 361 623 B1**

(12) **FASCICULE DE BREVET EUROPEEN**

(45) Date de publication et mention de la délivrance du brevet:
**31.03.2021 Bulletin 2021/13**

(51) Int Cl.:
**H02P 6/08** *(2016.01)* **H02P 29/024** *(2016.01)*

(21) Numéro de dépôt: **18156504.5**

(22) Date de dépôt: **13.02.2018**

(54) **ALTERNO-DÉMARREUR, VÉHICULE AUTOMOBILE ET PROCÉDÉ DE COMMANDE ASSOCIÉS**

STARTERGENERATOR, ENTSPRECHENDES KRAFTFAHRZEUG UND ENTSPRECHENDES STEUERVERFAHREN

ALTERNATOR STARTER, ASSOCIATED MOTOR VEHICLE AND CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2017 FR 1751179**

(43) Date de publication de la demande:
**15.08.2018 Bulletin 2018/33**

(73) Titulaire: **VALEO EQUIPEMENTS ELECTRIQUES MOTEUR**
**94046 Créteil Cedex (FR)**

(72) Inventeurs:
• **GUILLERM, Baptiste**
**94046 CRETEIL CEDEX (FR)**
• **CANITROT, Didier**
**94046 CRETEIL CEDEX (FR)**
• **BCHAIER, Ahmed**
**94046 Créteil (FR)**

(74) Mandataire: **Duprez, Richard**
**Valeo Equipements Électriques Moteur**
**2, rue André Boulle**
**94046 Creteil Cedex (FR)**

(56) Documents cités:
WO-A1-2011/161348     FR-A1- 2 951 880
JP-A- S61 254 098     US-A- 5 231 344
US-A1- 2014 375 243

**Description**

La présente invention concerne le domaine des alterno-démarreurs et plus particulièrement les alterno-démarreurs pour véhicules automobiles.

L'utilisation des alterno-démarreurs est de plus en plus répandue dans le domaine automobile car il permet de réduire le nombre de pièces et de réduire les coûts de fabrication.

Cependant, lorsque l'alterno-démarreur est utilisé en mode démarreur, les courants requis pour atteindre le couple de démarrage demandé peuvent être très élevés.

Or, de tels courants peuvent conduire à de fortes chutes de tension au niveau de la batterie. Ces chutes de tension peuvent impacter les autres équipements du véhicule. Ainsi, lors d'un démarrage, cela peut conduire à une alimentation insuffisante de certains équipements comme les phares ou l'auto-radio nuisant ainsi au confort pour l'utilisateur. De plus, dans le cas des véhicules à alterno-démarreurs, le moteur peut être éteint alors que le véhicule est en marche de manière à réduire la consommation énergétique et les émissions de polluants. Dans ce cas, le redémarrage du moteur se fait alors que le véhicule avance de sorte qu'une chute de tension au niveau de la batterie peut conduire à une alimentation insuffisante d'équipements liés à la sécurité des utilisateurs comme par exemple un dispositif d'airbag ou un dispositif de direction assistée.

Il apparaît donc comme nécessaire de limiter au maximum les chutes de tension induites par un démarrage du moteur de manière à préserver le confort et surtout la sécurité des utilisateurs.

La demande US2014/375243 divulgue un dispositif de commande d'un moteur électrique comprenant un circuit principal, un détecteur de tension et un contrôleur. Le contrôleur comprend un contrôleur de vitesse générant une commande de couple et commandant un onduleur en fonction de cette commande de couple. Le document WO2011/161348 divulgue un système à alterno- démarreur (1) couplé à un moteur thermique (2). Le système est apte à fonctionner en démarreur et en alternateur et l'alterno-démarreur (3) comporte un circuit d'excitation (10) alimentant en courant d'excitation à travers des balais (90) une bobine d'excitation (8) logée dans le rotor (5).

A cet effet, la présente invention concerne un procédé de commande d'un alterno-démarreur de véhicule automobile en mode démarreur, ledit alterno-démarreur comprenant un onduleur alimenté par un réseau électrique de bord, ledit procédé comprenant les étapes suivantes :

- on commande l'onduleur en fonction d'une consigne de couple moteur,
- on détermine la tension aux bornes de l'onduleur,
- on compare la tension aux bornes de l'onduleur à un seuil de tension prédéterminé,

si la tension aux bornes de l'onduleur est inférieure au seuil de tension prédéterminé,
- on réduit la consigne de couple moteur.

Selon un autre aspect de la présente invention, l'étape de détermination de la tension aux bornes de l'onduleur comprend la mesure du courant et de la tension délivrée par le réseau électrique de bord et la tension aux bornes de l'onduleur étant calculé en prenant en compte la résistance des câbles.

Selon un aspect supplémentaire de la présente invention, si la tension mesurée est comprise dans une première plage de valeurs prédéterminée, la consigne de couple est réduite d'une première valeur et si la tension mesurée est comprise dans une deuxième plage de valeurs prédéterminée inférieure à la première plage de valeurs, la consigne de couple est réduite d'une deuxième valeur supérieure à la première valeur.

Selon un aspect additionnel de la présente invention, l'alterno-démarreur comprend un stator comprenant des enroulements de phase et un rotor comprenant des électro-aimants et dans lequel, lors d'un démarrage, on commande l'onduleur avec des signaux de modulation à largeur d'impulsion destinés à alimenter les enroulements de phase du stator et on commande les électro-aimants du rotor par un courant d'excitation pour produire un champ rotor, le champ stator et le champ rotor étant déphasés d'un angle d'avance prédéterminé.

Selon un autre aspect de la présente invention, le procédé comprend également une étape de mesure de la position angulaire du rotor et de la vitesse du rotor.

Selon un aspect supplémentaire de la présente invention, les signaux de modulation à largeur d'impulsion, le courant d'excitation et l'angle d'avance sont déterminés en fonction de la consigne de couple moteur, de la position angulaire du rotor, de la vitesse du rotor et de la tension déterminée aux bornes de l'onduleur.

La présente invention concerne également un alterno-démarreur de véhicule automobile comprenant :

- un onduleur alimenté par un réseau électrique de bord pour un fonctionnement en mode démarreur,
- un module de commande de l'onduleur configuré pour piloter l'onduleur en fonction d'une consigne de couple moteur lors du fonctionnement en mode démarreur, le module de commande étant configuré pour :
- déterminer la tension aux bornes de l'onduleur,
- comparer la tension aux bornes de l'onduleur avec un seuil de tension prédéterminé et,
- réduire la valeur de la consigne de couple si la tension aux bornes de l'onduleur est inférieure au seuil de tension prédéterminé.

Selon un aspect supplémentaire de la présente invention, l'alterno-démarreur comprend également un stator alimenté par l'onduleur et un rotor alimenté par un courant d'excitation et le module de commande comprend :

- une unité de mesure de la vitesse et/ou de la postion du rotor,
- une unité de mesure du courant et de la tension délivrés par le réseau électrique de bord,
- un circuit d'excitation configuré pour alimenter des électro-aimants du rotor et produire un champ rotor présentant un angle d'avance prédéterminé avec le champ tournant induit par le pilotage du stator,

le module de commande étant configuré pour déterminer la tension aux bornes de l'onduleur à partir du courant et de la tension délivrés par le réseau électrique de bord et pour déterminer les signaux de modulation à largeur d'impulsion, le courant d'excitation du rotor et l'angle d'avance en fonction de la consigne de couple moteur, de la position angulaire du rotor, de la vitesse du rotor et de la tension déterminée aux bornes de l'onduleur.

La présente invention concerne également un véhicule automobile comprenant un alterno-démarreur tel que décrit précédemment.

D'autres caractéristiques et avantages de l'invention ressortiront de la description suivante, donnée à titre d'exemple et sans caractère limitatif, en regard des dessins annexés sur lesquels :

- la figure 1 représente un schéma d'un alterno-démarreur et des éléments de commande de l'alterno-démarreur ;
- la figure 2 représente un exemple d'algorithme pour déterminer la tension aux bornes de l'onduleur de l'alterno-démarreur ;
- la figure 3 représente un exemple d'algorithme pour déterminer la consigne de couple à appliquer en fonction de la tension au niveau de l'onduleur ;
- la figure 4 représente un exemple d'organisation de l'unité de traitement.

Sur toutes les figures, les éléments ayant des fonctions identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou inter-changées pour fournir d'autres réalisations.

Dans la suite de la description, le terme « mode démarreur » pour qualifier un alterno-démarreur correspond au mode de fonctionnement dans lequel l'alterno-démarreur est utilisé pour fournir une énergie mécanique à partir d'une énergie électrique mais ne se limite pas à la phase de démarrage mais s'étend également à un fonctionnement moteur en cours d'utilisation, par exemple lorsque l'alterno-démarreur est utilisé pour fournir un couple additionnel en consommant de l'énergie électrique (aussi appelé « torque assist » ou « boost » en anglais).

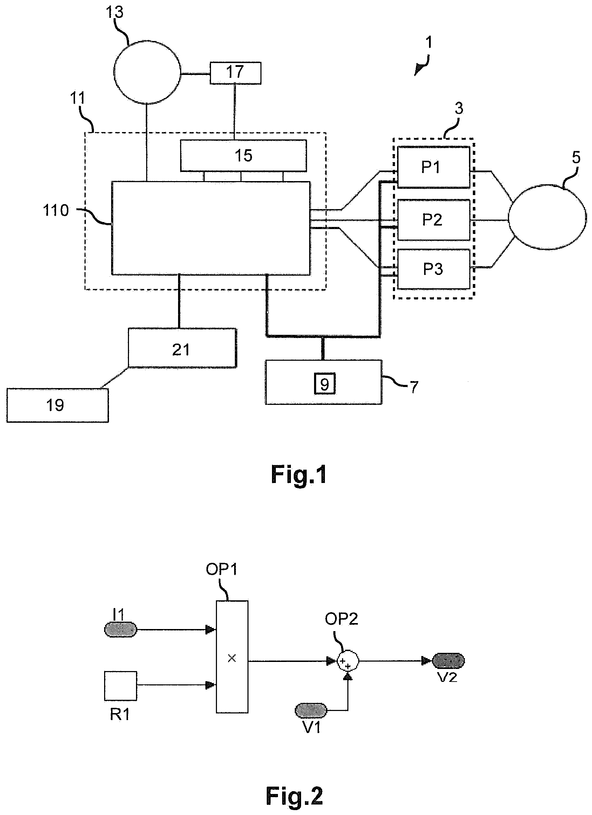

La présente invention concerne un alterno-démarreur notamment pour véhicule automobile. La figure 1 représente un schéma des éléments de commande d'un alterno-démarreur 1. L'alterno-démarreur 1 comprend un onduleur 3 qui permet de convertir une tension continue en tension alternative et inversement. L'onduleur 3 comprend trois modules de puissance notés P1, P2 et P3 associés respectivement aux trois phases ou enroulements d'un stator 5. Alternativement, le stator peut comprendre 6 phases et l'onduleur peut comprendre trois modules de puissance (2 phases par module) ou six modules de puissance (1 phase par module). En mode démarreur, l'onduleur 3 est alimenté par un réseau électrique de bord 7 comprenant une batterie 9 délivrant une tension continue. L'onduleur 3 est associé à un module de commande 11 configuré pour piloter l'onduleur 3 en fonction d'une consigne de couple lors du fonctionnement en mode démarreur. Le module de commande 11 établit par exemple une commande à largeur d'impulsion ou modulation à largeur d'impulsion (MLI) ce qui permet de créer un champ tournant.

Le module de commande 11 est également configuré pour alimenter des électro-aimants d'un rotor 13 de l'alterno-démarreur 1 par un courant d'excitation. Le module de commande 11 est configuré pour que l'angle d'avance entre le champ magnétique du rotor 13 et le champ tournant créé par le stator 5 corresponde à un angle d'avance prédéterminé qui dépend du régime moteur.

L'alterno-démarreur 1 comprend donc un circuit d'excitation configuré pour alimenter des électro-aimants du rotor 13 et produire un champ rotor présentant un angle d'avance prédéterminé avec le champ tournant induit par le pilotage de l'onduleur 3 alimentant le stator 5, ledit circuit d'excitation étant piloté par le module de commande 11.

L'alterno-démarreur 1 comprend également une unité de mesure de la vitesse et/ou de la position du rotor 13 connectée au module de commande 11. Cette unité de mesure comprend par exemple un ou des capteur(s) de position, par exemple des capteurs à effet Hall 15 couplés à un aimant 17 disposé sur le rotor 13 de manière à mesurer la position du rotor 13. La vitesse de rotation du rotor 13 peut également être déterminée. Cette position mesurée du rotor 17 est utilisée par une unité de traitement 110 du module de commande 11 pour déterminer les signaux de commande à appliquer au stator 5 et au rotor 13 pour obtenir la consigne de couple désirée.

Le module de commande 11 est également connecté à une unité de contrôle 19 du moteur du véhicule via une interface 21. L'interface 21 correspond par exemple à un câble de connexion ou à une interface sans fil notamment de type bluetooth® ou Wifi™. La consigne de couple est par exemple transmise par cette unité de contrôle 19.

De plus, le module de commande 11 est configuré pour déterminer la tension aux bornes de l'onduleur 3. Pour cela, le courant et la tension délivrés par le réseau électrique de bord 7 sont mesurés par une unité de mesure du courant et de la tension délivrés par le réseau électrique de bord 7. Cette unité est connectée au module de commande 11. La tension aux bornes de l'onduleur 3 est déterminée par le module de commande 11 à partir de ces mesures de courant et de tension. Cette détermination peut être réalisée de manière numérique par l'unité de traitement 110 du module de commande 11.

La figure 2 représente un exemple d'algorithme pour déterminer la tension V2 aux bornes de l'onduleur 3. Ce schéma comprend une entrée constante R1 correspondant à la résistance des câbles d'alimentation du réseau électrique de bord 7 et deux entrées variables I1 et V1 correspondant respectivement au courant et à la tension mesurés aux bornes de l'onduleur 3. Les entrées I1 et V1 sont reliées aux entrées d'un opérateur multiplication OP1 dont la sortie est reliée à une première entrée d'un opérateur addition OP2. L'entrée V1 est reliée à une deuxième entrée de l'opérateur addition OP2. La sortie de l'opérateur addition OP2 fournit la tension V2 aux bornes de l'onduleur 3 selon l'équation $V2 = V1 + R1*I1$.

De plus, le module de commande 11 est configuré pour comparer la tension V2 aux bornes de l'onduleur 3 qui peut être déterminée comme décrit précédemment avec un seuil de tension prédéterminé noté S1 (non représenté sur la figure 2). Ce seuil de tension prédéterminé S1 est choisi pour éviter tout dysfonctionnement des équipements du véhicule du fait d'une chute de tension trop importante au niveau du réseau électrique de bord 7. Par exemple, avec une tension nominale de la batterie 9 comprise entre 12,5 et 13V, ce seuil de tension prédéterminé S1 peut être d'environ 10,5 ou 11V. De plus, il est également possible de définir un deuxième seuil S2 dit de sécurité ou de protection en-dessous duquel l'alterno-démarreur 1 est désactivé pour éviter l'endommagement des différents éléments du véhicule. Le deuxième seuil S2 correspond par exemple à un niveau de tension compris entre 6 et 7,5V.

Dans le cas où la tension V2 aux bornes de l'onduleur 3 est inférieure au seuil de tension prédéterminé S1, le module de commande 11 est configuré pour réduire la valeur de la consigne de couple moteur. De plus, différentes valeurs de tension ou plages ou intervalles de tension V2 aux bornes de l'onduleur 3 peuvent être définis et associés à des réductions de couple prédéterminées de sorte que plus la valeur de la tension aux bornes de l'onduleur 3 est inférieure au seuil de tension prédéterminé S1, plus la consigne de couple est réduite. Par exemple, pour une tension comprise dans une première plage de valeurs située entre 0 et 0,2V en-dessous du seuil prédéterminé S1, la valeur de la consigne de couple est réduite de 5 %, et pour une tension comprise dans une deuxième plage de valeur comprise entre 0,2 et 0,4V en dessous du seuil prédéterminé S1, la valeur de couple est réduite de 10 % et ainsi de suite de manière à obtenir une réduction de 100 % pour une valeur de tension correspondant au deuxième seuil S2. La taille des différentes plages peut être variable et la valeur de réduction de couple peut ne pas être inversement proportionnelle à la valeur de la tension mesurée mais suivre une loi exponentielle ou hyperbolique ou tout autre loi adaptée connue de l'homme du métier. On peut également avoir une diminution continue de la consigne de couple pour une variation continue de la tension mesurée.

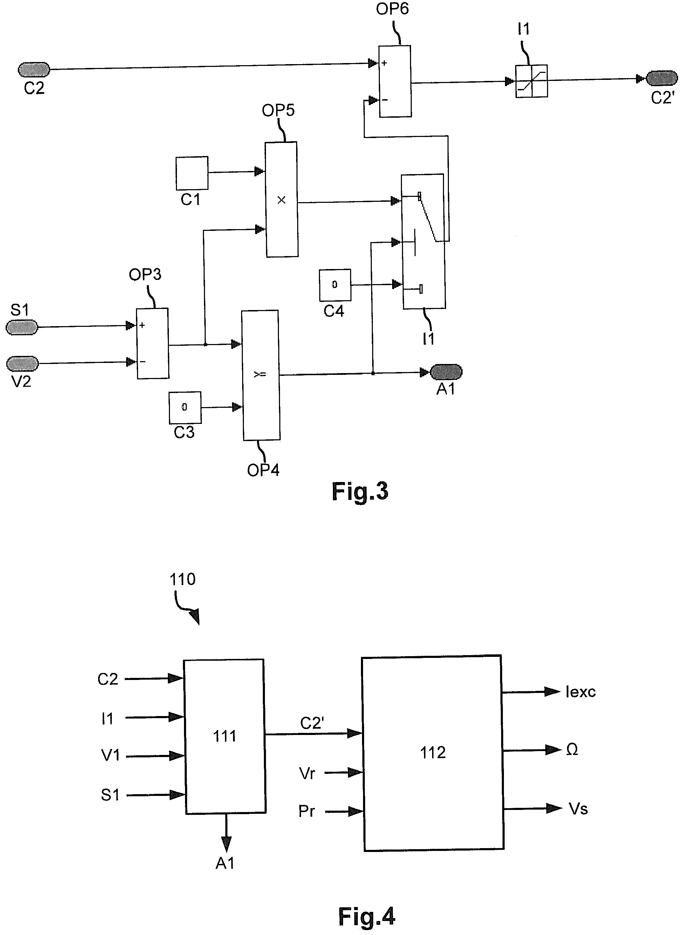

La figure 3 représente un exemple d'algorithme permettant de faire varier la consigne de couple C1 de manière proportionnelle en fonction de la tension V2 aux bornes de l'onduleur déterminée lorsque cette dernière est inférieure au seuil S1. La valeur de la tension V2 aux bornes de l'onduleur 3 déterminée et la valeur du seuil S1 sont transmises sur les entrées d'un opérateur soustraction OP3. La sortie de l'opérateur soustraction OP3 est transmise d'une part sur une entrée d'un opérateur comparateur OP4 et d'autre part sur une entrée d'un opérateur multiplication OP5. Une constante C1 est transmise sur la deuxième entrée de l'opérateur multiplication OP5. La constante C1 correspond au coefficient de proportionnalité de la réduction de la consigne de couple en fonction de la valeur de tension V2 aux bornes de l'onduleur 3 déterminée et permet d'obtenir la dynamique de réaction voulue (plus la constante C1 est grande et plus la tension sera réduite pour une valeur de tension déterminée donnée).

D'autre part, une constante C3 ayant la valeur zéro est transmise sur la deuxième entrée de l'opérateur comparateur OP4. La sortie de l'opérateur comparateur OP4 est reliée d'une part à une balise ou drapeau A1 destiné à informer un utilisateur de la réduction de la consigne de couple et d'autre part à une commande d'un interrupteur B1. L'interrupteur B1 comprend par ailleurs une première entrée reliée à la sortie de l'opérateur multiplication OP5 et une deuxième entrée reliée à une constante C4 ayant la valeur zéro. La sortie de l'interrupteur B1 est reliée à la deuxième entrée d'un opérateur soustraction OP6 tandis que la valeur de la consigne de couple C2 est transmise sur la première entrée dudit opérateur soustraction OP6. La sortie de l'opérateur soustraction OP6 est reliée à un opérateur de contrôle OP7 qui vérifie que la valeur obtenue en sortie de l'opérateur soustraction OP6 est comprise dans des limites prédéfinies. La valeur obtenue en sortie de l'opérateur de contrôle OP7 correspond à la nouvelle valeur de consigne de couple C2'.

Ainsi, en fonctionnement, le module de commande 11 détermine la valeur de la tension V2 aux bornes de l'onduleur 3 et compare cette valeur avec la valeur du seuil prédéterminé S1.

Si la valeur de V2 est supérieure à la valeur de S1, la balise A1 reste inactive et la sortie de l'interrupteur B1 est relié à la deuxième entrée, c'est-à-dire à la valeur zéro de sorte que la valeur de la consigne de couple C2 n'est pas modifiée (C2'=C2).

Si la valeur de V2 est inférieure à la valeur de S1, la sortie de l'opérateur comparateur OP4 est modifiée de sorte que la balise A1 devient active et que l'interrupteur B1 bascule vers l'entrée reliée à l'opérateur multiplication OP5. L'activation de la balise A1 correspond par exemple à l'éclairage d'un voyant de contrôle au niveau du tableau de bord du véhicule ou à l'activation d'une alarme sonore ou tout autre moyen permettant d'avertir l'utilisateur. Cependant, la présente invention peut être mise en œuvre sans l'utilisation d'une telle balise A1. De plus, la valeur de la différence entre S1 et V2 est multipliée par la constante C1 et la valeur obtenue est soustraite à la valeur de la consigne de couple C2 pour obtenir la nouvelle consigne de couple C2'. La valeur de la nouvelle consigne de couple C2' est donc donnée par l'équation :

$$C2'=C2-C1*(S1-V2).$$

La figure 4 représente un exemple de configuration de l'unité de traitement 110.

L'unité de traitement 110 comprend un premier sous-module 111 configuré pour déterminer la chute de tension V2 aux bornes de l'onduleur 3 et la consigne de couple C2' à appliquer en fonction de la chute de tension V2 mesurée. La consigne de couple C2' étant déterminée selon la méthode décrite en figure 3. Ce premier sous-module 111 comprend ainsi quatre entrées : une première entrée pour recevoir la valeur du seuil prédéterminé S1, une deuxième entrée pour recevoir la mesure de la tension V1 aux bornes de l'onduleur 3, une troisième entrée pour recevoir la mesure du courant I1 aux bornes de l'onduleur 3 et une quatrième entrée pour recevoir la consigne de couple C2 transmise par exemple par l'unité de contrôle 19. Le premier sous-module 111 comprend également deux sorties : une première sortie optionnelle correspondant à la balise A1 pour alerter l'utilisateur de la réduction de la consigne de couple et la deuxième sortie pour transmettre la nouvelle consigne de couple C2'.

L'unité de traitement 110 comprend également un deuxième sous-module 112 configuré pour appliquer la consigne de couple C2'. Le deuxième sous-module 112 comprend trois entrées : une première entrée pour recevoir la consigne de couple C2' transmise par le premier sous-module 111, une deuxième entrée pour recevoir la vitesse de rotation Vr du rotor 13 et une troisième entrée pour recevoir la position Pr du rotor 13. Le deuxième sous-module 112 comprend également trois sorties : une première sortie pour transmettre la valeur du courant d'excitation Iexc à appliquer au rotor 13, une deuxième sortie pour transmettre la valeur de l'angle d'avance Ω entre le champ magnétique du rotor 13 et le champ tournant créé par le stator 5 et une troisième sortie pour transmettre les signaux de commande Vs au stator 5 correspondant par exemple à une commande à largeur d'impulsions.

Le procédé de commande de l'alterno-démarreur 1 comprend donc une étape de commande de l'onduleur 3 en fonction d'une consigne de couple moteur C2 transmise par exemple par l'unité de contrôle 19 du moteur, une étape de détermination de la tension V2 au bornes de l'onduleur 3, une étape de comparaison de la tension déterminée V2 avec une seuil prédéterminé S1 et une étape d'adaptation de la consigne de couple moteur C2' en fonction en fonction du résultat de la comparaison, la consigne de couple C2' étant réduite lorsque la tension V2 est inférieure au seuil prédéterminé S1.

La présente invention vise également un véhicule automobile équipé d'un alterno-démarreur tel que décrit précédemment.

**Revendications**

1. Procédé de commande d'un alterno-démarreur (1) de véhicule automobile en mode démarreur, ledit alterno-démarreur (1) comprenant un onduleur (3) alimenté par un réseau électrique de bord (7), ledit procédé comprenant les étapes suivantes :

   - on commande l'onduleur (3) en fonction d'une consigne de couple moteur (C2, C2') **caractérisé en ce que**
   - on détermine la tension (V2) aux bornes de l'onduleur (3),
   - on compare la tension (V2) aux bornes de l'onduleur (3) à un seuil de tension prédéterminé (S1),
   si la tension (V2) aux bornes de l'onduleur (3) est inférieure au seuil de tension prédéterminé (S1),
   - on réduit la consigne de couple moteur (C2, C2').

2. Procédé de commande selon la revendication 1 dans lequel l'étape de détermination de la tension (V2) aux bornes de l'onduleur (3) comprend la mesure du courant (I1) et de la tension (V1) délivrés par le réseau électrique de bord (7) et la détermination de la tension aux bornes de l'onduleur (3) à partir des mesures de courant (I1) et de tension (V1) délivrés par le réseau électrique de bord (7) et de la résistance (R1) des câbles.

3. Procédé de commande selon la revendication 1 ou 2 dans lequel si la tension déterminée (V2) est comprise dans une première plage de valeurs prédéterminée, la consigne de couple (C2, C2') est réduite d'une première valeur et si la tension déterminée (V2) est comprise dans une deuxième plage de valeurs prédéterminée inférieure à la première plage de valeurs, la consigne de couple (C2, C2') est réduite d'une deuxième valeur supérieure à la première valeur.

4. Procédé de commande selon l'une des revendications précédentes dans lequel l'alterno-démarreur (1) comprend un stator (5) comprenant des enroulements de phase et un rotor (13) comprenant des électro-aimants et dans lequel, lors d'un démarrage, on commande l'onduleur (3) avec des signaux de modulation à largeur d'impulsion destinés à alimenter les enroulements de phase du stator (5) et on commande les électro-aimants du rotor (13) par un courant d'excitation (Iexc) pour produire un champ rotor, le champ stator et le champ rotor étant déphasés d'un angle d'avance (Ω) prédéterminé.

5. Procédé de commande selon la revendication 4 comprenant également une étape de mesure de la position angulaire (Pr) du rotor (13) et de la vitesse (Vr) du rotor (13).

6. Procédé de commande selon la revendication 5 dans lequel les signaux de modulation à largeur d'impulsion, le courant d'excitation (Iexc) et l'angle d'avance (Ω) sont déterminés en fonction de la consigne de couple moteur (C2, C2'), de la position angulaire du rotor (Pr), de la vitesse du rotor (Vr) et de la tension (V2) déterminée aux bornes de l'onduleur (13).

7. Alterno-démarreur (1) de véhicule automobile comprenant :

- un onduleur (3) alimenté par un réseau électrique de bord et destiné à alimenter un stator (5) lors d'un fonctionnement en mode démarreur,
- un module de commande (11) de l'onduleur (3) configuré pour piloter l'onduleur (3) en fonction d'une consigne de couple moteur (C2, C2') lors du fonctionnement en mode démarreur,

caractérisé en ce que le module de commande (11) est configuré pour :

- déterminer la tension (V2) aux bornes de l'onduleur (3),
- comparer la tension (V2) aux bornes de l'onduleur (3) avec un seuil de tension prédéterminé (S1) et,
- réduire la valeur de la consigne de couple (C2, C2') si la tension (V2) aux bornes de l'onduleur (3) est inférieure au seuil de tension prédéterminé (S1).

8. Alterno-démarreur (1) selon la revendication 7 comprenant un stator (5) alimenté par l'onduleur (3) et un rotor (13) alimenté par un courant d'excitation (Iexc) et dans lequel l'alterno-démarreur (1) comprend :

- une unité de mesure de la vitesse (Vr) et/ou de la position du rotor (13) connectée au module de commande (11),
- une unité de mesure du courant (I1) et de la tension (V1) délivrés par le réseau électrique de bord (7) connectée au module de commande (11),
- un circuit d'excitation configuré pour alimenter des électro-aimants du rotor (13) et produire un champ rotor présentant un angle d'avance (Ω) prédéterminé avec le champ tournant induit par le pilotage de l'onduleur (3) alimentant le stator (5), ledit circuit d'excitation étant piloté par le module de commande (11),

et dans lequel le module de commande (11) est configuré pour déterminer la tension (V2) aux bornes de l'onduleur (3) à partir du courant et de la tension délivrés par le réseau électrique de bord (7) et pour déterminer les signaux de modulation à largeur d'impulsion (Vs), le courant d'excitation (Iexc) du rotor (13) et l'angle d'avance (Ω) en fonction de la consigne de couple moteur (C2, C2'), de la position angulaire du rotor (Pr), de la vitesse du rotor (Vr) et de la tension (V2) déterminée aux bornes de l'onduleur (3).

9. Véhicule automobile comprenant un alterno-démarreur (1) selon l'une des revendications 7 ou 8.

**Patentansprüche**

1. Verfahren zum Steuern eines Startergenerators (1) eines Kraftfahrzeugs im Startermodus, wobei der Startergenerator (1) einen Wechselrichter (3) beinhaltet, der von einem elektrischen Bordnetz (7) mit Strom versorgt wird, wobei das Verfahren die folgenden Schritte beinhaltet:

- Steuern des Wechselrichters (3) in Abhängigkeit von einem Motordrehmomentsollwert (C2, C2'),

dadurch gekennzeichnet, dass

- die Spannung (V2) an den Anschlüssen des Wechselrichters (3) bestimmt wird,
- die Spannung (V2) an den Anschlüssen des Wechselrichters (3) mit einem vorgegebenen Spannungsschwellenwert (S1) verglichen wird, wenn die Spannung (V2) an den Anschlüssen des Wechselrichters (3) kleiner als der vorgegebene Spannungsschwellenwert (S1) ist,

- Reduzieren des Motordrehmomentsollwerts (C2, C2').

2. Steuerverfahren nach Anspruch 1, wobei der Schritt des Bestimmens der Spannung (V2) an den Anschlüssen des Wechselrichters (3) das Messen des Stroms (I1) und der Spannung (V1), die von dem elektrischen Bordnetz (7) bereitgestellt werden, und das Bestimmen der Spannung an den Anschlüssen des Wechselrichters (3) anhand der Messungen des Stroms (I1) und der Spannung (V1), die von dem elektrischen Bordnetz (7) bereitgestellt werden, und des Widerstands (R1) der Kabel beinhaltet.

3. Steuerverfahren nach Anspruch 1 oder 2, wobei, wenn die bestimmte Spannung (V2) in einem vorgegebenen ersten Wertebereich liegt, der Drehmomentsollwert (C2, C2') um einen ersten Wert verringert wird und, wenn die bestimmte Spannung (V2) in einem vorgegebenen zweiten Wertebereich liegt, der kleiner als der erste Wertebereich ist, der Drehmomentsollwert (C2, C2') um einen zweiten Wert verringert wird, der größer als der erste Wert ist.

4. Steuerverfahren nach einem der vorhergehenden Ansprüche, wobei der Startergenerator (1) einen Stator (5), der Phasenwicklungen beinhaltet, und einen Rotor (13), der Elektromagnete beinhaltet, beinhaltet und wobei bei einem Start der Wechselrichter (3) mit Pulsweitenmodulationssignalen gesteuert wird, die dazu bestimmt sind, die Phasenwicklungen des Stators (5) mit Strom zu versorgen, und die Elektromagnete des Rotors (13) durch einen Erregerstrom (Iexc) gesteuert werden, um ein Rotorfeld zu erzeugen, wobei das Statorfeld und das Rotorfeld um einen vorgegebenen Voreilwinkel ($\Omega$) phasenverschoben sind.

5. Steuerverfahren nach Anspruch 4, das ebenfalls einen Schritt des Messens der Winkelposition (Pr) des Rotors (13) und der Drehzahl (Vr) des Rotors (13) beinhaltet.

6. Steuerverfahren nach Anspruch 5, wobei die Pulsweitenmodulationssignale, der Erregerstrom (Iexc) und der Voreilwinkel ($\Omega$) in Abhängigkeit von dem Motordrehmomentsollwert (C2, C2'), der Winkelposition des Rotors (Pr), der Drehzahl des Rotors (Vr) und der an den Anschlüssen des Wechselrichters (13) bestimmten Spannung (V2) bestimmt werden.

7. Startergenerator (1) eines Kraftfahrzeugs, der Folgendes beinhaltet:

- einen Wechselrichter (3), der von einem elektrischen Bordnetz mit Strom versorgt wird und dazu bestimmt ist, bei einem Betrieb im Startermodus einen Stator (5) mit Strom zu versorgen,

- ein Steuermodul (11) des Wechselrichters (3), das dazu konfiguriert ist, bei einem Betrieb im Startermodus den Wechselrichter (3) in Abhängigkeit von einem Motordrehmomentsollwert (C2, C2') anzusteuern,

**dadurch gekennzeichnet, dass** das Steuermodul (11) zu Folgendem konfiguriert ist:

- Bestimmen der Spannung (V2) an den Anschlüssen des Wechselrichters (3),
- Vergleichen der Spannung (V2) an den Anschlüssen des Wechselrichters (3) mit einem vorgegebenen Spannungsschwellenwert (S1) und
- Reduzieren des Werts des Drehmomentsollwerts (C2, C2'), wenn die Spannung (V2) an den Anschlüssen des Wechselrichters (3) kleiner als der vorgegebene Spannungsschwellenwert (S1) ist.

8. Startergenerator (1) nach Anspruch 7, der einen Stator (5), der von dem Wechselrichter (3) mit Strom versorgt wird, und einen Rotor (13), der von einem Erregerstrom (Iexc) mit Strom versorgt wird, beinhaltet und wobei der Startergenerator (1) Folgendes beinhaltet:

- eine Einheit zum Messen der Drehzahl (Vr) und/oder der Position des Rotors (13), die mit dem Steuermodul (11) verbunden ist,
- eine Einheit zum Messen des Stroms (I1) und der Spannung (V1), die von dem elektrischen Bordnetz (7) bereitgestellt werden, die mit dem Steuermodul (11) verbunden ist,
- eine Erregerschaltung, die dazu konfiguriert ist, Elektromagnete des Rotors (13) mit Strom zu versorgen und ein Rotorfeld zu erzeugen, das mit dem Drehfeld, das durch das Ansteuern des Wechselrichters (3), der den Stator (5) mit Strom versorgt, induziert wird, einen vorgegebenen Voreilwinkel ($\Omega$) bildet, wobei die Erregerschaltung durch das Steuermodul (11) angesteuert wird,

und wobei das Steuermodul (11) dazu konfiguriert ist, die Spannung (V2) an den Anschlüssen des Wechselrichters (3) anhand des Stroms und der Spannung, die von dem elektrischen Bordnetz (7) bereitgestellt werden, zu bestimmen und die Pulsweitenmodulationssignale (Vs), den Erregerstrom (Iexc) des Rotors (13) und den Voreilwinkel ($\Omega$) in Abhängigkeit von dem Motordrehmomentsollwert (C2, C2'), der Winkelposition des Rotors (Pr), der Drehzahl des Rotors (Vr) und der an den Anschlüssen des Wechselrichters (3) bestimmten Spannung (V2) zu bestimmen.

**9.** Kraftfahrzeug, das einen Startergenerator (1) nach einem der Ansprüche 7 oder 8 beinhaltet.

## Claims

**1.** Method for controlling a starter-alternator (1) of a motor vehicle in starter mode, said starter-alternator (1) comprising an inverter (3) powered by an onboard electrical network (7), said method comprising the following steps:

- the inverter (3) is controlled according to an engine torque setpoint (C2, C2') **characterized in that**
- the voltage (V2) at the terminals of the inverter (3) is determined,
- the voltage (V2) at the terminals of the inverter (3) is compared to a predetermined voltage threshold (S1), if the voltage (V2) at the terminals of the inverter (3) is lower than the predetermined voltage threshold (S1),
- the engine torque setpoint (C2, C2') is reduced.

**2.** Control method according to Claim 1, wherein the step of determination of the voltage (V2) at the terminals of the inverter (3) comprises the measurement of the current (I1) and of the voltage (V1) delivered by the onboard electrical network (7) and the determination of the voltage at the terminals of the inverter (3) from the measurements of current (I1) and of voltage (V1) delivered by the onboard electrical network (7) and the resistance (R1) of the cables.

**3.** Control method according to Claim 1 or 2, wherein if the determined voltage (V2) lies within a first predetermined range of values, the torque setpoint (C2, C2') is reduced by a first value and if the determined voltage (V2) lies within a second predetermined range of values lower than the first range of values, the torque setpoint (C2, C2') is reduced by a second value greater than the first value.

**4.** Control method according to one of the preceding claims, wherein the starter-alternator (1) comprises a stator (5) comprising phase windings and a rotor (13) comprising electromagnets and wherein, upon starting up, the inverter (3) is controlled with pulse width modulation signals intended to power the phase windings of the stator (5) and the electromagnets of the rotor (13) are controlled by an excitation current (Iexc) to produce a rotor field, the stator field and the rotor field being out of phase by a predetermined advance angle ($\Omega$).

**5.** Control method according to Claim 4, also comprising a step of measurement of the angular position (Pr) of the rotor (13) and of the speed (Vr) of the rotor (13).

**6.** Control method according to Claim 5, wherein the pulse width modulation signals, the excitation current (Iexc) and the advance angle ($\Omega$) are determined as a function of the engine torque setpoint (C2, C2'), of the angular position of the rotor (Pr), of the speed of the rotor (Vr) and of the voltage (V2) determined at the terminals of the inverter (13).

**7.** Starter-alternator (1) of a motor vehicle comprising:

- an inverter (3) powered by an onboard electrical network and intended to power a stator (5) when operated in starter mode,
- a control module (11) of the inverter (3) configured to control the inverter (3) as a function of an engine torque setpoint (C2, C2') when operated in starter mode,

**characterized in that** the control module (11) is configured to:

- determine the voltage (V2) at the terminals of the inverter (3),
- compare the voltage (V2) at the terminals of the inverter (3) with a predetermined voltage threshold (S1) and,
- reduce the value of the torque setpoint (C2, C2') if the voltage (V2) at the terminals of the inverter (3) is lower than the predetermined voltage threshold (S1).

**8.** Starter-alternator (1) according to Claim 7, comprising a stator (5) powered by the inverter (3) and a rotor (13) powered by an excitation current (Iexc) and wherein the starter-alternator (1) comprises:

- a unit for measuring the speed (Vr) and/or the position of the rotor (13) connected to the control module (11),
- a unit for measuring the current (I1) and the voltage (V1) delivered by the onboard electrical network (7) connected to the control module (11),
- an excitation circuit configured to power electromagnets of the rotor (13) and produce a rotor field having a predetermined advance angle ($\Omega$) with the rotating field induced by the controlling of the inverter (3) powering the stator (5), said excitation circuit being controlled by the control module (11),

and wherein the control module (11) is configured to determine the voltage (V2) at the terminals of the inverter (3) from the current and the voltage delivered by the onboard electrical network (7) and to determine the pulse width modulation signals (Vs), the excitation current (Iexc) of the rotor (13) and the advance angle ($\Omega$) as a function of the engine torque setpoint (C2, C2'), of the angular position of the rotor (Pr), of the speed of the rotor (Vr) and of the voltage (V2) determined at the terminals of the inverter (3).

9. Motor vehicle comprising a starter-alternator (1) according to one of Claims 7 and 8.

**Fig.1**

**Fig.2**

**Fig.3**

**Fig.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014375243 A
- WO 2011161348 A